# EUROPEAN PATENT APPLICATION

(11) **EP 4 574 789 A1**
(43) Date of publication of application: **25.06.2025**
(21) Application number: 23383325.0
(22) Date of filing: 20.12.2023
(51) Int. Cl.: C04B 14/36, C04B 20/04, C04B 7/02, C04B 22/06, C04B 24/04, C04B 22/12, C04B 22/08, C04B 22/14, C04B 28/02, C04B 103/00, C04B 20/02, C04B 111/00

(54) **CEMENTITIOUS COMPOSITIONS COMPRISING LATERITE**

(71) Applicant: Sika Technology AG, 6340 Baar (CH)
(72) Inventor: FERRADAS, Samuel, 28840 Mejorada del Campo (Madrid) (ES); PASCUAL, Thomas, 03110 MUCHAMIEL (Alicante) (ES)
(74) Representative: Sika Patent Attorneys

(57) **Abstract**

The present invention relates to cementitious compositions with high replacement levels of cement by laterite and comprising an activator selected from alkali metal or alkaline earth metal salts of hydroxide, formate, chloride, sulphate, and/or nitrate. The present invention also relates to uses of such cementitious compositions as tile adhesive.

## Description

### Technical field

The present invention relates to cementitious compositions with high replacement levels of cement by laterite. The present invention also relates to uses of such cementitious compositions as tile adhesive.

### Background of the invention

Cement-based building materials, especially concrete or mortars, rely on cementitious binders. Cementitious binders typically are hydraulic binders the most abundant of which are cements and especially Ordinary Portland Cement. However, the use of cements and especially of Ordinary Portland Cement has a high environmental footprint. One major reason are the high CO₂ emissions associated with the manufacture of cements. Many efforts have thus been made to replace cements at least partially as binders from building materials.

One possibility is the use of materials with cementitious properties, pozzolans and/or latent hydraulic materials as cement replacement. A known material of this type is laterite. Laterite is a surface product that occurs frequently in tropical regions and is formed by intensive and prolonged weathering of the underlying rocks.

For example, A.T. John et al have reported about the use of laterite as partial cement replacement in concrete in International Journal of Scientific & Engineering Research (2019, Vol 10, Issue 12, p. 100 - 104).

It is well known that the replacement of cement by materials with cementitious properties, pozzolans and/or latent hydraulic materials influences the properties of fresh as well as of hardened mortars or concrete made thereby. This is in particular the case at high replacement levels. High replacement levels are desired to reduce the environmental footprint of concrete or mortars as much as possible.

In particular, when replacing cement with cementitious properties, pozzolans and/or latent hydraulic materials, suitable activators are needed to achieve a desired strength of the resulting cementitious material.

There exists thus a continuing need to provide cementitious compositions which have high replacement levels of cement by laterite and still develop sufficient mechanical strength for given applications.

### Summary of the invention

It is an objective of the present invention to provide cementitious compositions which have high replacement levels of cement by laterite, and still develop sufficient strength, especially adhesion strength. Especially, it is an objective of the present invention to provide cementitious compositions which have high replacement levels of cement by laterite, and which are useful as cementitious tile adhesives.

It was surprisingly found that a cementitious composition of claim 1 can solve these objectives. It has further been surprisingly found that a cementitious composition as claimed in claim 1 can be used as a cementitious tile adhesive.

In particular, activators selected from alkali metal or alkaline earth metal salts of hydroxide, formate, chloride, sulphate, and/or nitrate have been shown to increase the adhesion strength of cementitious materials comprising hydraulic binders with a high replacement level of cement by laterite. The adhesion strength can be further increased by the addition of hydrophobic agents.

Further aspects of the present invention are the subject matter of further independent claims. Preferred embodiments of the present invention are the subject matter of dependent claims.

### Detailed ways

In a first aspect the present invention relates to a cementitious composition comprising or consisting of
a) a hydraulic binder comprising (in each case relative to the total dry weight of hydraulic binder)
   ai) 10 - 90 w%, preferably 50 - 60 w% of at least one cement,
   aii) 10 - 90 w%, preferably 40 - 50 w% of laterite,
b) at least one activator selected from alkali metal or alkaline earth metal salts of hydroxide, formate, chloride, sulphate, and/or nitrate.

Examples for cementitious compositions are especially concrete and mortars.

A cement within the present context is a Portland cement, an aluminate cement, a sulfoaluminate cement, or mixtures thereof.

Portland Cement preferably is CEM I, CEM II, CEM III, CEM IV, and/or CEM V according to standard EN 197-1:2011. However, Portland Cements according to other international standards, e.g. ASTM standards or Chinese standards, can be used as well. The term "aluminate cement" stands in particular for a cement with an aluminum content, measured as Al₂O₃, of at least 30 w%, especially at least 35 w%, in particular 35 - 58 w%. Preferably, the aluminate cement is alumina cement according to standard EN 14647:2006. Preferably, sulfoaluminate cement is calcium sulfoaluminate cement (CSA).

In particular, the at least on cement is selected from Portland cement of type CEM I, CEM II, CEM III, CEM IV, CEM V according to standard EN 197-1:2011, or mixtures thereof.

A hydraulic binder of the present invention may additionally comprise at least one of slag, fly ash, micro silica, lime, and/or gypsum.

Laterite is a surface product that occurs frequently in tropical regions and is formed by intensive and prolonged weathering of the underlying rocks. Laterites are mainly composed of oxides of silicon, aluminum, and iron. For example, the chemical composition of laterite can be 55 w% of SiO₂, 20 w% of Al₂O₃, 15 w% of Fe₂O₃, 5 w% of MgO and CaO, 2 w% of Na₂O and K₂O, 3 w% of other oxides including TiO₂, P₂O₅. The chemical composition of laterite can be determined by XRF analysis.

Laterite typically consists of a mixture of aluminosilicates of the clay group and iron oxides. Typical minerals present in laterite are kaolinite, halloysite, goethite, hematite, gibbsite. However, other minerals may also be present. The phase composition of laterite can be determined by XRD analysis.

Laterite may be used in uncalcined or in calcined form. Calcined laterites especially are low-temperature calcined laterites that have been thermally treated at temperatures between 500 - 1200°C or in a flash calcination process at temperatures between 800 - 1100 °C. A suitable flash calcination process is for example described in WO 2014/085538.

According to embodiments, in a cementitious composition of the present invention the laterite is in an uncalcined form and comprises or consists of 40 - 90 w%, preferably 50 - 70 w%, of aluminosilicates and 10 - 60 w%, preferably 30 - 50 w%, of iron oxides.

According to embodiments, in a cementitious composition of the present invention the laterite is in a calcined form and comprises at least 40 w% of calcined clay, especially of metakaolin, and at least 30 w% of iron oxides, especially of wuestite, hematite and/or magnetite.

Preferably, laterite is sieved. According to embodiments, laterite has a particle size of below 150 µm measured by sieve analysis as described for example in standard ASTM C136/C136M.

It is particularly preferred that a weight ratio of cement to laterite in the hydraulic binder is between 10:1 to 1:10, preferably 2:1 to 1:5, more preferably 2:1 to 1:2, especially 1.5:1 to 1:1. For the calculation of such weight ratio the total amount of cement is used. This means that, if more than one cement is comprised, the sum of all cements is considered for the calculation. However, further pozzolanic or latent hydraulic materials which may be present are not included in the calculation.

A cementitious composition of the present invention comprises an activator selected from alkali metal or alkaline earth metal salts of hydroxide, formate, chloride, sulphate, and/or nitrate. Salts of carbonate, hydrogen carbonate, or silicate are not preferred.

Very preferred activators are calcium hydroxide, calcium formate, sodium chloride, sodium sulphate, and/or sodium nitrate. Such activators additionally help to increase the strength, especially the adhesion strength, of cementitious compositions of the present invention.

According to embodiments, the activator is selected from calcium hydroxide, calcium formate and/or sodium chloride.

Preferably, the activator is present in a cementitious composition of the present invention in an amount of 0.1 - 5 w%, preferably 0.5 - 4 w%, more preferably 1.5 - 3.6 w%, relative to the total dry weight of the hydraulic binder.

It can be preferred for a composition of the present invention to additionally comprise a hydrophobic agent.

A hydrophobic agent may additionally help to increase the adhesion strength, especially after water or heat storage, of cementitious compositions of the present invention.

Any hydrophobic agent known in concrete or cement industry may be used. However, preferably the hydrophobic agent is selected from metal soaps, fatty acids and their salts, alkyl esters of fatty acids, vegetable oils, waxes, bitumen, silicones, oligosiloxanes, silanes, or mixtures thereof. Particularly preferred hydrophobic agents are metal salts of fatty acids, in particular calcium, magnesium, or zinc salts of fatty acids such as calcium stearate, magnesium stearate, zinc stearate, calcium oleate, magnesium oleate, zinc oleate.

If present, a hydrophobic agent is used in a cementitious composition of the present invention in an amount of 0.5 - 5 w%, preferably 1 - 2.5 w%, relative to the total dry weight of the hydraulic binder.

It is possible that a cementitious composition of the present invention additionally comprises a rheology aid selected from cellulose ether and/or starch ether.

Cellulose ether can be any of carboxymethylcellulose, hydroxymethylcellulose, hydroxyethylcellulose, methylhydroxyethylcellulose, and/or methylhydroxypropylcellulose. According to embodiments, the cellulose ether is selected from methylhydroxypropylcellulose or methylhydroxyethylcellulose. Very preferably, the cellulose ether, especially the methylhydroxypropylcellulose or methylhydroxyethylcellulose has a viscosity of 150 - 180000 mPas, even more preferably of 3000 - 100000 mPas measured as a 2% solution in water at 20°C.

Starch ether in particular is hydroxypropyl starch ether which may additionally be phosphated.

It is possible that a cementitious composition of the present invention additionally comprises a redispersible polymer powder.

The term redispersible polymer powder refers to a powder which contains a polymer and after introduction into water forms a stable dispersion. A redispersible polymer powder encompasses not only the polymer but typically also mixtures thereof with e.g. protective colloids, emulsifiers, and support materials. Redispersible polymer powders can be manufactured for example by spray drying of polymer dispersions as for example described in patent application EP 1042391. Suitable redispersible powders are for example available from Wacker Chemie AG under the trade name Vinnapas.

The use of redispersible powders of synthetic organic polymers is preferred for the context of the present invention. A synthetic organic polymer within the context of the present invention can be produced by radical polymerization of monomers selected form the group consisting of ethylene, propylene, butylene, isoprene, butadiene, styrene, acrylonitrile, acrylic acid, methacrylic acid, esters of acrylic acid, esters of methacrylic acid, vinyl esters, vinyl chloride. It is preferred that synthetic polymers are copolymers synthesized from two or more, preferably two, different monomers. The sequence of the copolymer can be alternating, blocked or random. Preferred synthetic organic polymers are copolymers of vinyl acetate and ethylene, vinyl acetate and ethylene and methyl methacrylate, vinyl acetate and ethylene and vinyl ester, vinyl acetate and ethylene and acrylic acid ester, vinyl chloride and ethylene and vinyl laureate, vinyl acetate and vinyl versatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester. The glass transition temperature (Tg) of said synthetic organic polymers can vary in a wide range. Tg of suitable synthetic organic polymers can be for example between -50°C and +60°C, preferably between -45°C and +35°C, more preferred between -25°C and +15°C.

According to some preferred embodiments, a cementitious composition of the present invention comprises a redispersible polymer powder selected from copolymers of vinyl acetate and ethylene and/or from copolymers with a glass transition temperature of between -5 and +15 °C.

According to preferred embodiments, the cementitious composition of the present invention comprises or consists of (based on the dry weight of the cementitious composition unless otherwise stated)
a) 20 - 40 w% of a hydraulic binder comprising at least one cement and laterite in a weight ratio of 10:1 - 1:10, preferably 2:1 - 1:5, more preferably 2:1 to 1:2, especially 1.5:1 - 1:1,
b) 0.1 - 5 w%, preferably 0.5 - 4 w%, more preferably 1.5 - 3.6 w%, relative to the total dry weight of the hydraulic binder, of at least one activator selected from alkali metal or alkaline earth metal salts of hydroxide, formate, chloride, sulphate, and/or nitrate, and
c) 0.5 - 5 w%, preferably 1 - 2.5 w%, relative to the total dry weight of the hydraulic binder, of at least one hydrophobic agent,
d) 50 - 78 w% of aggregates and/or fillers, and
e) optionally further admixtures.

Aggregates can be any material that is non-reactive in the hydration reaction of cementitious binders. Aggregates can be any aggregate typically used for construction materials. Typical aggregates are for example rock, crushed stone, crushed concrete, gravel, sand, especially quartz sand, river sand and/or manufactured sand, glass, expanded glass, hollow glass beads, glass ceramics, quarry wastes, porcelain, electro fused or sintered abrasives, firing support, silica xerogels, bio sourced aggregates such as hemp or sunflower. A particularly suitable aggregate is sand.

Fillers are characterized by a small particle size, in particular a particle size of below 0.063 mm. Especially, fillers are selected from fine calcium carbonate, ground limestone, ground dolomite, ground aluminum oxide, and/or non-reactive slags. Non-reactive means that slags useful as fillers do not react with water in hydration reactions.

The particle size can be measured by sieve analysis as described for example in standard ASTM C136/C136M.

Further admixtures are chemically different from the activator, hydrophobic agent, rheology aid, and redispersible polymer powder described above. Further admixtures preferably are selected from plasticizers and/or superplasticizers, air entrainers, defoamers, stabilizers, rheology modifiers, especially thickeners, water reducers, accelerators, retarders, water resisting agents, strength enhancing additives, fibers, dedusting agents, blowing agents, pigments, corrosion inhibitors, biocides, and/or chromium(VI) reducers. It can be advantageous to combine two or more of the mentioned further additives in one cementitious composition.

Due to the high content of iron oxides, laterite has a red color. A cementitious composition of the present invention also has a reddish color depending on the amount of laterite present. Most cementitious compositions, especially mortar and concrete are grey or white. It may therefore be preferred to add pigments to a composition of the present invention to achieve a desired color, especially grey.

An increased amount of laterite present in a composition of the present invention typically leads to an increase in water demand. It can therefore be preferred to add a suitable plasticizer, superplasticizer, and/or water reducer to a composition of the present invention.

The cementitious composition of the present invention preferably is a dry composition. Dry means that the content of water in a cementitious composition of the present invention is below 5 w%, preferably below 1 w%, especially below 0.1 w%, relative to the total weight of the cementitious composition.

Before use, a cementitious composition of the present invention is mixed with water to provide a wet mix. The amount of water used for the mixing depends, among other things, on the desired workability. Typically, a higher amount of water added will lead to a more flowable wet mix, while a lower amount of water added will lead to a stiffer wet mix. A suitable weight ratio of water to a cementitious composition of the present invention is between 0.15 - 1, preferably 0.2 - 0.6.

Hardening of the cementitious mixture of the present invention starts with the addition of water. It is thus highly preferred to add the water to the cementitious composition to produce a wet mix only shortly before the intended application of the wet mix.

In another aspect, the present invention relates to a method for the preparation of a cementitious composition comprising the steps of (i) providing a hydraulic binder comprising at least one cement and laterite, (ii) providing an activator selected from alkali metal or alkaline earth metal salts of hydroxide, formate, chloride, sulphate, and/or nitrate, and (iii) intermixing and/or intergrinding said hydraulic binder and said activator.

Features and embodiments described above also apply to this aspect.

Intermixing in step (iii) can be done during the manufacture of a cementitious composition such as a dry mortar. It is, however, also possible to first dissolve or disperse the activator in water, preferably mixing water, and then intermix with the hydraulic binder. It is in principle also possible to first intermix the activator with other constituents of the cementitious composition such as, for example, aggregates, fillers, or further admixtures. This may especially be preferred to minimize the number of additions during a dry mortar manufacture.

The term "intergrinding" stands for a process where said activator is co-milled with said hydraulic binder. The admixture is added to a constituent of the hydraulic binder before and/or during the grinding thereof.

Intergrinding can be done on attrition mills. Especially suitable attrition mills are semi-autogenous mills and compressive grinders.

A compressive grinder within the present context is a type of grinder able to exert a compressive force on a bed of material to be ground. Preferably, the compressive force is exerted by rotating cylinders or a rotor-stator. A compressive grinder can for example be a crusher or a roller mill. According to embodiments, the compressive grinder is a vertical roller mill, a horizontal roller mill, or jar crusher with controllable, adjustable compression. According to embodiments, in a method of the present invention, the intergrinding is done in a vertical roller mill or a horizontal roller mill.

A semi-autogenous mill is for example a ball mill or an agitation mill. According to embodiments, in a method of the present invention, the intergrinding is done in a ball mill or in an agitation mill.

According to embodiments a method for the preparation of a cementitious composition of the present invention additionally comprises a step of intermixing and/or intergrinding a hydrophobic agent with said hydraulic binder and/or mixture of hydraulic binder and activator.

In another aspect, the present invention relates to the use of a cementitious composition as claimed in any of claims 1 - 12 as a tile adhesive, especially according to standard EN 12004:2017.

Features and embodiments described above also apply to this aspect.

In particular, a cementitious composition of the present invention is used as a tile adhesive in the form of a wet mix. A wet mix is a mix of a cementitious composition as described above with water as described above. Methods for mixing of the cementitious composition with water are not particular limited and are known to the person skilled in the art. Mixing can be continuous, semi-continuous or batch-wise. Continuous mixing offers the advantage of a high material throughput.

It is possible to apply the wet mix of the present invention by any means known to the person skilled in the art. According to one embodiment, the wet mix is applied by trowel, brush, or roller. According to another embodiment, the wet mix is applied in a spray application. According to yet another embodiment, the wet mix is poured from a suitable receptable. Spray applications have the advantage that the application can be done very quickly and in a continuous manner. Suitable equipment for such spray applications is known to the person skilled in the art.

A wet mix of the present invention can be applied in a single layer or in multiple layers. Application in multiple layers has the advantage that a higher overall layer thickness can be achieved.

A primer can be applied to the substrate before application of a wet mix of the present invention. It is also possible to apply a primer in between different layers of a wet mix of the present invention during a multiple layer application.

In still another aspect the present invention relates to the hardened bodies resulting from hardening and curing a wet mix of the present invention. The present invention especially relates to a hardened cementitious tile adhesive.

The following examples will provide the person skilled in the art with further embodiments of the present invention. They are not meant to limit the invention in any way.

### Examples

The following table 2 gives an overview of raw materials used.

**Table 2: Raw materials used**

| | |
|---|---|
| OPC | Ordinary Portland Cement 42.5 N |
| Laterite (raw) | 43 w% Kaolinite, 30 w% Goethite, 11 w% Halloysite, 11 w% Hematite, 1.5 w% Ilmenite, 1.5 w% Anatas, 1 w% Quartz |
| Sand | Washed silica sand; particle size 0.063 - 0.4 mm |
| CaCO₃ | Limestone filler; D97 = 0.125, retention on 0.063 mm sieve: 20.8%, |
| Calcium formate | Sigma Aldrich (99% purity) |
| Sodium chloride | Sigma Aldrich (99.5% purity) |
| Rheology aid | Methylhydroxyethyl cellulose ether and/or starch ether |
| RDP | Poly(vinyl alcohol) stabilized copolymer of vinyl acetate /ethylene with Tg = 0°C |
| Hydrophobic agent | Metal soap (for example stearate or oleate of calcium, magnesium, or zinc) |

### Examples

The compositions as given in below tables 3 and 4 were prepared at 23°C and 50% r.h. First dry mixes were prepared by weighing all ingredients except water into a Hobart N50 mixer and mixing for 2 min at low speed. Dry mixes were used without storage.

Water was weighed into the mixing pan of a Hobart N50 mixer. The respective dry mix was then added while stirring at low speed within 5 - 10 s. The respective weight ratio of water to dry powder was adjusted to give comparable viscosities. The weight ratios are given in below tables 3 and 4. Mixing was continued at low speed for 30 s. Then mixing was stopped and the pan and paddle were cleaned within 60 s. Mixing was then continued at low speed for another 60 s. Then mixing was stopped and the mix was left to mature for 3 min before the mixing was resumed for 15 s. The resulting mixtures were smooth without any lumps.

Adhesion strength was measured in accordance with DIN EN 1348:2007-11 after the time and ageing indicated in below tables 3 and 4.

**Table 3: compositions C-1 (comparative), E-1 to E-5 (inventive) and results**

| | **C-1** | **E-1** | **E-2** | **E-3** | **E-4** | **E-5** |
|---|---|---|---|---|---|---|
| OPC [g] | 25 | 17.5 | 15.0 | 12.5 | 7.5 | 2.5 |
| Laterite (raw) [g] | | 7.5 | 10.0 | 12.5 | 17.5 | 22.5 |
| Sand [g] | 71 | 70.6 | 70.6 | 70.6 | 70.6 | 70.2 |
| CaCO₃ [g] | 3.75 | 3.75 | 3.75 | 3.75 | 3.75 | 3.75 |
| Rheology aid (cellulose ether) [g] | 0.25 | 0.25 | 0.25 | 0.25 | 0.25 | 0.25 |
| Calcium formate [g] | | 0.4 | 0.4 | 0.4 | 0.4 | 0.4 |
| Water/powder weight ratio | 0.25 | 0.23 | 0.25 | 0.27 | 0.25 | 0.28 |
| Adhesion strength after 7d [MPa] | 0.80 | 0.95 | 0.70 | 0.58 | 0.43 | 0.44 |
| Adhesion strength after water immersion [MPa] | 0.41 | 0.46 | 0.63 | 0.42 | 0.2 | 0.15 |
| Adhesion strength after heat ageing [MPa] | 0.38 | 1.09 | 0.85 | 0.37 | 0.08 | 0.05 |

It can be seen from the results of table 3 that the use of a combination of OPC and raw laterite can improve the adhesion strength. Generally, an adhesion strength of more than 0.5 MPa is considered acceptable according to standard EN 12004:2017. It can further be seen that particularly good adhesion strength after water immersion is obtained at a weight ratio of OPC: Laterite of 1.5:1 and 1:1, while at weight ratios of 1:2.3 or lower the adhesion strength after water immersion becomes low. It can also be seen that particularly good adhesion strength after heat ageing is obtained at a weight ratio of OPC: Laterite of 2.3:1 and 1.5:1, while at weight ratios of 1:2.3 or lower the adhesion strength after heat ageing becomes low.

**Table 4: compositions E-6 to E-9 (inventive) and results**

| | **E-6** | **E-7** | **E-8** | **E-9** |
|---|---|---|---|---|
| OPC [g] | 17.5 | 15.0 | 12.5 | 12.5 |
| Laterite (raw) [g] | 7.5 | 10.0 | 12.5 | 12.5 |
| Sand [g] | 70.3 | 70.3 | 70.3 | 70.3 |
| CaCO₃ [g] | 3.75 | 3.75 | 3.75 | 3.75 |
| Rheology aid (cellulose ether) [g] | 0.25 | 0.25 | 0.25 | 0.25 |
| Calcium formate [g] | 0.4 | 0.4 | 0.4 | |
| Sodium chloride [g] | | | | 0.8 |
| Hydrophobic agent [g] | 0.35 | 0.35 | 0.35 | 0.35 |
| Water/powder weight ratio | 0.23 | 0.25 | 0.26 | 0.26 |
| Adhesion strength after 7d [MPa] | 1.05 | 0.92 | 0.80 | 0.86 |
| Adhesion strength after water immersion [MPa] | 0.61 | 0.71 | 0.74 | 0.82 |
| Adhesion strength after heat ageing [MPa] | 0.36 | 0.87 | 0.54 | 0.49 |

It can be seen from the results of above table 4 that the addition of a hydrophobic agent can significantly improve the adhesion strength. This is in particular the case at weight ratios of OPC : Laterite of 1.5 : 1 or lower.

## Claims

1. A cementitious composition comprising or consisting of
a) a hydraulic binder comprising (in each case relative to the total dry weight of hydraulic binder)
ai) 10 - 90 w%, preferably 50 - 60 w% of at least one cement,
aii) 10 - 90 w%, preferably 40 - 50 w% of laterite,
b) at least one activator selected from alkali metal or alkaline earth metal salts of hydroxide, formate, chloride, sulphate, and/or nitrate.

2. A cementitious composition according to claim 1, **characterized in that** the at least on cement is selected from Portland cement of type CEM I, CEM II, CEM III, CEM IV, CEM V according to standard EN 197-1:2011, or mixtures thereof.

3. A cementitious composition according to any of the preceding claims, **characterized in that** the laterite is in an uncalcined form and comprises or consists of 40 - 90 w%, preferably 50 - 70 w%, of aluminosilicates and 10 - 60 w%, preferably 30 - 50 w%, of iron oxides.

4. A cementitious composition according to any of the claims 1 or 2, **characterized in that** the laterite is in a calcined form and comprises at least 40 w% of calcined clay, especially of metakaolin, and at least 30 w% of iron oxides, especially of wuestite, hematite and/or magnetite.

5. A cementitious composition according to any of the preceding claims, **characterized in that** a weight ratio of cement to laterite in the hydraulic binder is between 10:1 to 1:10, preferably 2:1 to 1:5, more preferably 2:1 to 1:2, especially 1.5:1 to 1:1.

6. A cementitious composition according to any of the preceding claims, **characterized in that** the activator is selected from calcium hydroxide, calcium formate, and/or sodium chloride.

7. A cementitious composition according to any of the preceding claims, **characterized in that** the activator is present in an amount of 0.1 - 5 w%, preferably 0.5 - 4 w%, more preferably 1.5 - 3.6 w%, relative to the total dry weight of the hydraulic binder.

8. A cementitious composition according to any of the preceding claims, **characterized in that** it additionally comprises a hydrophobic agent, preferably selected from metal soaps, fatty acids and their salts, alkyl esters of fatty acids, vegetable oils, waxes, bitumen, silicones, oligosiloxanes, silanes, or mixtures thereof.

9. A cementitious composition according to claim 8, **characterized in that** the hydrophobic agent is present in an amount of 0.5 - 5 w%, preferably 1 - 2.5 w%, relative to the total dry weight of the hydraulic binder.

10. A cementitious composition according to any of the previous claims, **characterized in that** it additionally comprises a rheology aid selected from cellulose ether and/or starch ether.

11. A cementitious composition according to any of the previous claims, **characterized in that** it additionally comprises a redispersible polymer powder, preferably selected from copolymers of vinyl acetate and ethylene and/or from copolymers with a glass transition temperature of between -5 and +15 °C.

12. A cementitious composition according to any of the previous claims, **characterized in that** it comprises or consists of
a) 20 - 40 w% of a hydraulic binder comprising at least one cement and laterite in a weight ratio of 10:1 -1:10, preferably 2:1 -1:5, more preferably 2:1 to 1:2, especially 1.5:1 - 1:1,
b) 0.1 - 5 w%, preferably 0.5 - 4 w%, more preferably 1.5 - 3.6 w%, relative to the total dry weight of the hydraulic binder, of at least one activator selected from alkali metal or alkaline earth metal salts of hydroxide, formate, chloride, sulphate, and/or nitrate, and
c) 0.5 - 5 w%, preferably 1 - 2.5 w%, relative to the total dry weight of the hydraulic binder, of at least one hydrophobic agent,
d) 50 - 78 w% of aggregates and/or fillers, and
e) optionally further admixtures.

13. A method for the preparation of a cementitious composition comprising the steps of
(i) providing a hydraulic binder comprising at least one cement and laterite,
(ii) providing an activator selected from alkali metal or alkaline earth metal salts of hydroxide, formate, chloride, sulphate, and/or nitrate, and
(iii) intermixing and/or intergrinding said hydraulic binder and said activator.

14. A method as claimed in claim 13, **characterized in that** it additionally comprises a step of intermixing and/or intergrinding a hydrophobic agent with said hydraulic binder and/or mixture of hydraulic binder and activator.

15. Use of a cementitious composition as claimed in any of claims 1 - 12 as a tile adhesive, especially according to standard EN 12004:2017.
